# EUROPEAN PATENT APPLICATION

(11) **EP 3 418 091 A1**
(43) Date of publication of application: **26.12.2018**
(21) Application number: 18177638.6
(22) Date of filing: 14.06.2018
(51) Int. Cl.: B60H 1/34

(54) **AIR OUTLET**

(30) Priority: 19.06.2017 DE 102017113387
(71) Applicant: Illinois Tool Works Inc., Glenview, IL 60025 (US)
(72) Inventor: DEMERATH, Michael, 66909 Hüffler (DE); PACHER, Thomas, 67681 Sembach (DE); LE TOHIC, Laurent, 67677 Enkenbach-Alsenborn (DE); LEFEVER, Andrew, 57550 Remering (FR)
(74) Representative: Hauck Patentanwaltspartnerschaft mbB

(57) **Abstract**

The invention relates to an air outlet for a vehicle, comprising a housing with an air inlet opening and an air outlet opening, between which a flow connection is formed, further comprising a slat carrier, mounted movably in the housing, and a shut-off element which is movable between a closed position, in which it blocks the flow connection, and an open position, in which it frees the flow connection, the slat carrier being mounted movably in the housing, the slat carrier being coupled to the shut-off element such that, by actuation of the slat carrier, the shut-off element is adjustable between the closed position and the open position, the shut-off element being adjustable into intermediate positions between the closed position and the open position, starting from the closed position and/or starting from the open position, by actuation of the slat carrier, the shut-off element remaining in said intermediate positions until the slat carrier is actuated again.

## Description

The invention relates to an air outlet for a vehicle, comprising a housing with an air inlet opening and an air outlet opening, between which a flow connection is formed, further comprising a slat carrier, mounted movably in the housing, and a shut-off element which is movable between a closed position, in which it blocks the flow connection, and an open position, in which it frees the flow connection.

By way of such air outlets, the vehicle interior is ventilated. Air is fed via a rear air inlet opening and flows through the housing of the air outlet to a front air outlet opening, from which the air passes into the vehicle interior. Arranged in the housing is a slat carrier which bears a plurality of for example pivotable air-guiding slats. The air-guiding slats can be actuated by means of an operating element that is usually actuated manually. In this way, the air flow can be diverted in the desired way. Furthermore, a shut-off element, for example a shut-off flap that is mounted in a pivotable manner in the housing, is provided, said shut-off flap freeing or closing the flow connection between the air inlet opening and the air outlet opening depending on its position.

WO 2016/188 825 A1 discloses an air outlet for a motor vehicle, in which the slat carrier and the shut-off element are parts of a push-push mechanism. As a result of the slat carrier being pushed over from a use position in an actuating direction, the push-push mechanism is activated and the shut-off element changes between a completely open position and a completely closed position. In this way, either a maximum air flow through the air outlet is allowed or it is completely blocked. However, it may be desired to set the air quantity flowing through the air outlet in a more flexible manner.

DE 102 26 441 B3 discloses an air outlet in which the slat position is settable in a horizontal and vertical direction analogously to computer technology with a joystick separate from the slat carrier. When the air outlet is not activated, external slats can form a closed surface. By pressing on the button of the joystick, the slats and the throttle flap connected thereto via a corresponding mechanism are opened. When the button is pressed again, the slats and throttle flap are closed again. Alternatively, the throttle-flap position can be regulated by pressing on the button of the joystick multiple times. This air outlet is complicated in terms of construction and operation, however.

Proceeding from the explained prior art, the invention is based on the object of providing an air outlet of the type mentioned at the beginning which allows the air quantity flowing through the air outlet to be set flexibly in a structurally simple and easy to operate manner.

The invention achieves the object by way of the subject matter of claim 1. Advantageous configurations can be found in the dependent claims, the description and the figures.

For an air outlet of the type mentioned at the beginning, the invention achieves the object in that the slat carrier is mounted movably in the housing, the slat carrier being coupled to the shut-off element such that, by actuation of the slat carrier, the shut-off element is adjustable between the closed position and the open position, the shut-off element being adjustable into intermediate positions between the closed position and the open position, starting from the closed position and/or starting from the open position, by actuation of the slat carrier, the shut-off element remaining in said intermediate positions until the slat carrier is actuated again.

The air outlet according to the invention is intended for a vehicle, in particular a passenger car or truck. It is installed in the vehicle in order to ventilate the vehicle interior. Fresh air is fed to the air inlet opening and flows through the housing in a direction of flow to the air outlet opening, through which it passes into the vehicle interior to be ventilated. In order to guide the air flow, air-guiding slats are provided, which are held at least partially by a slat carrier. In order to divert the air flow, the air-guiding slats are mounted in a movable, preferably pivotable, manner. In this case, one or more first air-guiding slats can be provided, which are pivotable about a first pivot axle, for example a pivot axle that is horizontal in the mounted state, and one or more second air-guiding slats, which are pivotable about a second pivot axle, perpendicular to the first pivot axle, for example a pivot axle that is vertical in the mounted state. In this way, the air flow can be diverted for example upward and downward and to the side in the mounted state. In order to pivot the air-guiding slats, an actuating element that is actuable for example manually can be provided in a known manner, for example a sliding element arranged on the front side of the slat carrier.

The slat carrier of the air outlet according to the invention is mounted in a movable manner in the housing. For example, the slat carrier can be mounted in a longitudinally displaceable manner in the housing. The slat carrier and the shut-off element are coupled together. This coupling does not have to be of such a type that the two elements are permanently connected together. Rather, it may also be possible, for example, for the slat carrier to act on the shut-off element via a coupling element but (also) to be movable independently of the shut-off element. The slat carrier can be actuated directly so as to be moved. For example, this can take place via one of the front air-guiding slats arranged in the region of the air outlet opening. Thus, the slat carrier can be actuated for example by pushing the slat carrier or one of the front air-guiding slats. As a result of this actuation of the slat carrier, the shut-off element can be adjusted between the closed and the open position on account of the coupling. The shut-off element remains in the closed or open position in each case until the slat carrier is actuated again. According to the invention, the shut-off element can furthermore be adjusted into a plurality of intermediate positions between the closed position and the open position by the slat carrier being actuated and thus moved. The shut-off element remains in these intermediate positions, too, until the slat carrier is actuated again. It is possible for this adoption of intermediate positions in the air outlet according to the invention to be possible both starting from the closed position and starting from the open position. However, it is also possible for the intermediate positions to be settable only starting from one end position, i.e. from the closed position or the open position. Starting from the other end position in each case, it is then possible, by (further) actuation of the slat carrier, for example for the shut-off element to be adjusted directly back into the other end position in each case (as starting position).

As a result of the shut-off element being adjustable, according to the invention, into intermediate positions between the open and the closed position, the air quantity guided into the vehicle interior can be set in a flexible manner. At the same time, the setting of the shut-off element is particularly simple both in terms of operation and construction, since setting takes place by the slat carrier being moved directly, for example via an air-guiding slat carried by the slat carrier. Therefore, no complicated separate operating elements are necessary, as in the prior art. The mechanism for actuating the shut-off element can be arranged outside the housing of the air outlet and thus outside the flow connection. Undesired impairment of the air flow can thus be largely avoided. In a particularly practical manner, the shut-off element can be a shut-off flap mounted in a pivotable manner in the housing, said shut-off flap blocking the flow connection in the closed position and freeing the flow connection to a maximum extent in the open position.

According to one configuration, the shut-off element can be adjustable continuously into intermediate positions between the closed position and the open position. As a result, particularly flexible setting of the air quantity guided into the vehicle interior is achieved.

Alternatively, however, it is also possible for the shut-off element to be adjustable incrementally into intermediate positions between the closed position and the open position. As a result of the incremental adjustment, possible positions of the shut-off element are specified in a defined manner. It is thus advantageously possible to rule out particular positions of the shut-off element. For example, the incremental adjustment can take place such that the shut-off element cannot adopt a virtually closed or virtually open position. In practice, these positions regularly result in undesired flow noise (whistling). In principle, however, it is conceivable to exclude particular adjustment positions, in particular a virtually closed and/or virtually open position of the shut-off element, in the case of continuous adjustment, too.

According to a further configuration, the shut-off element can be held at least in the intermediate positions, and for example also in the end positions, by a friction fit between a first friction partner coupled to the shut-off element and a second friction partner coupled to the slat carrier. The friction fit is overcome by the slat carrier being moved for example in a first direction. The friction fit is sufficient to hold the shut-off element in the respective intermediate position. This ensures, in a particularly simple manner, that the shut-off element remains in the respectively set position.

According to a further configuration, a braking device can be provided which exerts a braking action on a braking element coupled to the shut-off element, said braking action keeping the shut-off element in the respective intermediate position. The braking element can be a rotary disk coupled to the shut-off element for conjoint rotation. The braking device can comprise a brake lever that is spring-pretensioned against the rotary disk. In particular when the shut-off element can adopt the intermediate positions only in one direction of movement, starting from only one end position, provision can furthermore be made for the braking device to exert its braking action only in a first direction of movement of the shut-off element. For the return movement of the shut-off element in a second direction opposite to the first direction, the braking action can be lifted entirely. This is otherwise also the case for the abovementioned friction fit. To this end, the friction partners or the braking device can be disengaged from one another or from the braking element when the shut-off element moves in the second direction of movement. This is realizable for example by a suitable control cam or control protrusions.

According to a further configuration, provision can be made for the slat carrier and the shut-off element to be parts of a push-push mechanism which is activatable by the slat carrier being pushed over from a particular use position in an actuating direction, the shut-off element changing its position as a result of the activation of the push-push mechanism. Push-push mechanisms are known per se. With such mechanisms, as a result of the slat carrier being movable slightly from a rest position (use position), in which the slat carrier can be pretensioned, for example spring-pretensioned, into an actuating position, the push-push kinematics can be triggered, this in turn bringing about for example incremental adjustment of the shut-off element. The push-push mechanism can in this case be configured such that, upon actuation of the slat carrier and thus of the push-push mechanism in one end position, i.e. the open or closed position, the shut-off element directly adopts the other end position in each case, i.e. the closed or open position, without adopting intermediate positions. This behavior can be ensured for example by what is known as a cardioid cam. Since the slat carrier can be pretensioned into a rest position, it thus adopts its starting position (rest position) again following actuation. The position of the slat carrier thus changes only briefly during the actuation. It would also be conceivable in principle, however, for the slat carrier to change its position depending on the position of the shut-off element and to remain in this changed position until further actuation takes place. This ensures that the position of the shut-off element is visually indicated.

According to a further configuration, provision can be made for the shut-off element to be adjustable from the closed position into the open position by the slat carrier being moved, preferably manually, in a first direction and/or from the open position into the closed position by the slat carrier being moved, preferably manually, in a second, opposite direction. In this configuration, in particular no push-push mechanism for actuating the shut-off element is provided. The shut-off element can be adjustable between the closed position and the open position and into the intermediate positions by the slat carrier being moved, preferably manually. The slat carrier is displaced for example in a first longitudinal direction, for example pushed into the housing, in order to move the shut-off element in the direction of the open or the closed position. In addition, the slat carrier can be displaced in a second, opposite longitudinal direction, for example pulled in a direction out of the housing, in order to move the shut-off element in the direction of the then closed or open position, respectively. In particular in this way, adjustment into the intermediate positions can also take place (in each case). The slat carrier can in this case remain in each case in the position adopted during the adjustment of the shut-off element, until further actuation takes place, thereby again ensuring a visual display.

It is then also possible for the shut-off element to be adjustable into intermediate positions between the open position and the closed position by the slat carrier being moved, preferably manually, in the first direction and/or in the second direction. The shut-off element can adopt stable intermediate positions both starting from the closed position and starting from the open position, or only starting from one of the closed or open position, as explained at the beginning. According to the invention, all combinations are possible in principle. Direct restoration of the shut-off element into the closed or open position can, as likewise explained, take place from the open or closed position, respectively, upon actuation of the slat carrier. This is not absolutely necessary, however. If direct restoration takes place, temporary decoupling of the shut-off element and slat carrier can take place.

According to a further configuration, a displaceably mounted latching element that is coupled to the slat carrier on one side and to the shut-off element on the other side can be provided. A plurality of latching receptacles can then be formed on the housing, the latching element latching in said latching receptacles in different positions of the shut-off element. Incremental setting of the shut-off element thus takes place in a simple manner. The latching receptacles can be formed for example by recesses, ramps, hooks or the like.

The latching element can be pretensioned into the latching receptacles by means of spring-pretensioning means. The latching element is then pushed out of the latching receptacle upon displacement counter to the spring-pretensioning. When the next latching receptacle is reached, the latching element is again moved into the latching receptacle by the spring-pretensioning.

According to a further configuration, provision can be made for the latching element to be formed by a latching bar which is coupled by its first end to the slat carrier or the shut-off element and has, in the region of its second, free end, a latching protrusion that latches in the latching receptacles. With its other end, the latching bar can act on the in each case other of the shut-off element and slat carrier in order to adjust the position of the shut-off element. It can also be connected or coupled in some other way by its second end to the in each case other of the shut-off element and slat carrier. The latching bar can be coupled in a pivotable manner by its first end to the slat carrier or the shut-off element. However, it can also be elastic, such that pivotable mounting is not necessary.

According to a further configuration, provision can be made for the latching element to comprise a latching bar which is coupled by its first end to the slat carrier or the shut-off element and which acts, by way of its second, free end, on a holding receptacle in which a latching part, preferably a latching ball or a latching cylinder, pretensioned into the latching receptacles by spring-pretensioning means, is arranged. The latching bar can be coupled in a pivotable manner by its first end to the slat carrier or the shut-off element. Again, however, it can also be elastic, such that pivotable mounting is not necessary. With its second end, it can be connected or coupled in some other way to the holding receptacle, such that it entrains the latter even upon retraction.

According to a further configuration, the slat carrier can be coupled to the shut-off element via a control lever. The control lever can be mounted in a pivotable manner on the slat carrier by way of its first end and be mounted in a pivotable manner on a first gear wheel by way of its second end. The first gear wheel can be coupled to the shut-off element for conjoint rotation. However, it is also possible for the first gear wheel to be engaged with a second gear wheel coupled to the shut-off element for conjoint rotation. In this configuration, targeted transmission via the gear wheels is possible.

According to a further configuration, provision can be made for the control lever to be coupled to the slat carrier with its first end and to engage, with its second, free end, in a toothing of a control disk coupled to the shut-off element for conjoint rotation, the control disk having a control cam in which a pivotably mounted lever arm is guided such that the control disk is rotated, starting from a starting position, counter to spring-pretensioning in the event of a longitudinal displacement of the control lever, the control lever latching, until the control disk reaches an end position, in the respectively next tooth of the toothing, in each case moving back into its starting position, and as a result holding the control disk. The lever arm is mounted in a pivotable manner with one end for example on the housing of the air outlet and engages with its other end in the control cam of the control disk. In this case, the end position is the closed or the open position. The control lever can be coupled in a pivotable manner to the slat carrier by its first end. However, it can again also be elastic, such that pivotable mounting is not necessary.

The control disk can be rotated back into its starting position, starting from the end position, by its spring-pretensioning in the event of a longitudinal displacement of the control lever. In order to rotate the control disk back into its starting position, from the end position, upon longitudinal displacement of the control lever, the control lever can be guided for example in a corresponding return portion of the control cam. However, it would also be conceivable for the control lever to be disengaged from the control cam of the control disk during the return, for example be pushed out of engagement by a control protrusion in the control cam, for example with the control lever being elastically deformed or pivoted.

Exemplary embodiments of the invention are explained in more detail in the following text with reference to figures, in which, schematically:
- Figure 1: shows a first perspective view of an air outlet according to the invention according to a first exemplary embodiment,
- Figure 2: shows a second perspective view of the air outlet from figure 1,
- Figure 3: shows a perspective view of an air outlet according to the invention according to a second exemplary embodiment,
- Figure 4: shows a second perspective view of the air outlet from figure 3,
- Figure 5: shows a detail of the air outlet shown in figure 3,
- Figure 6: shows a perspective partial view of an air outlet according to the invention according to a third exemplary embodiment,
- Figure 7: shows a further detail illustration of the air outlet shown in figure 6,
- Figure 8: shows a perspective partial view of an air outlet according to the invention according to a fourth exemplary embodiment,
- Figure 9: shows a perspective detail of an air outlet according to the invention according to a fifth exemplary embodiment,
- Figure 10: shows a perspective detail of an air outlet according to the invention according to a sixth exemplary embodiment,
- Figure 11: shows a perspective detail of an air outlet according to the invention according to a seventh exemplary embodiment,
- Figure 12: shows a perspective view of an air outlet according to the invention according to an eighth exemplary embodiment,
- Figure 13: shows a part of the illustration from figure 12,
- Figure 14: shows a further perspective view of the air outlet shown in figure 12,
- Figure 15: shows a sectional illustration of the view from figure 12,
- Figure 16: shows a partial side illustration of the air outlet shown in figure 12,
- Figure 17: shows a partial view of the illustration in figure 14,
- Figure 18: shows an enlarged detail of the illustration in figure 17, and
- Figure 19: shows a plan view of a part of the air outlet shown in figure 12.

Unless stated otherwise, identical reference signs designate identical or functionally identical components in the figures.

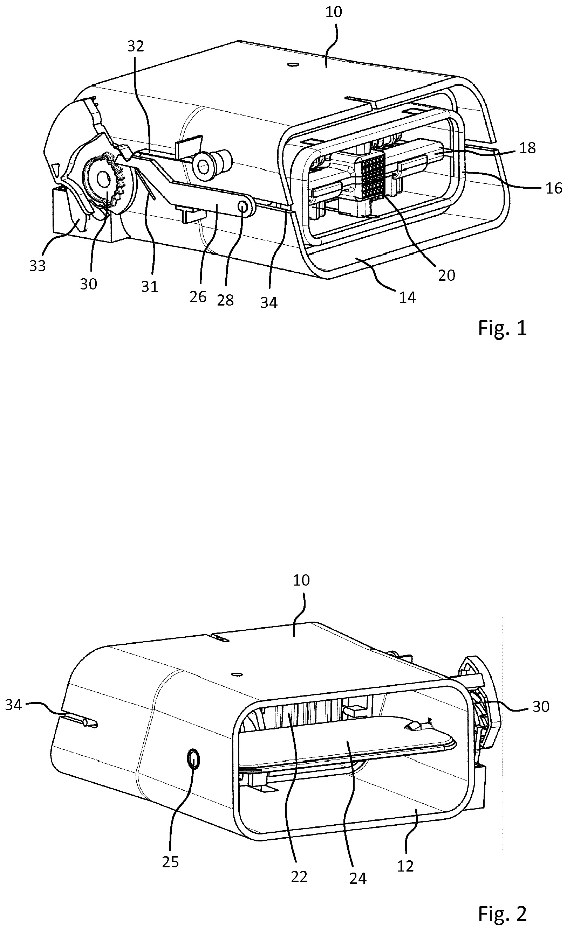

The air outlet according to the invention, shown in figures 1 and 2, is intended for a vehicle, for example a passenger car or truck. It has a housing 10 with an air inlet opening 12 and an air outlet opening 14, between which a flow connection is formed. Furthermore, the air outlet comprises a slat carrier 16 that is mounted in a movable manner, in the present case in a longitudinally displaceable manner, in the housing 10, is formed in a frame-like manner in the example shown and carries a front air-guiding slat 18, which is pivotable about a pivot axle that is horizontal in the mounted state. To this end, the slat carrier 16 has a manually actuable operating element 20. Furthermore, the slat carrier 16 carries a plurality of rear air-guiding slats 22, which are pivotable about an axle that is vertical in the mounted state. As a result of the operating element 20 being moved, the front air-guiding slat 18 and the rear air-guiding slats 22 can be pivoted, and thus the air flow can be diverted upward and downward or to the side in the mounted state.

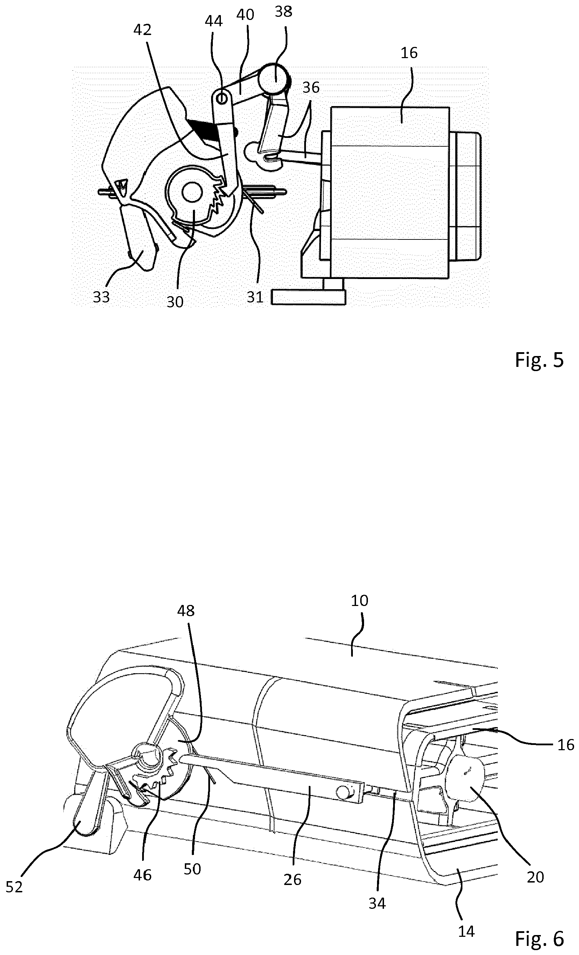

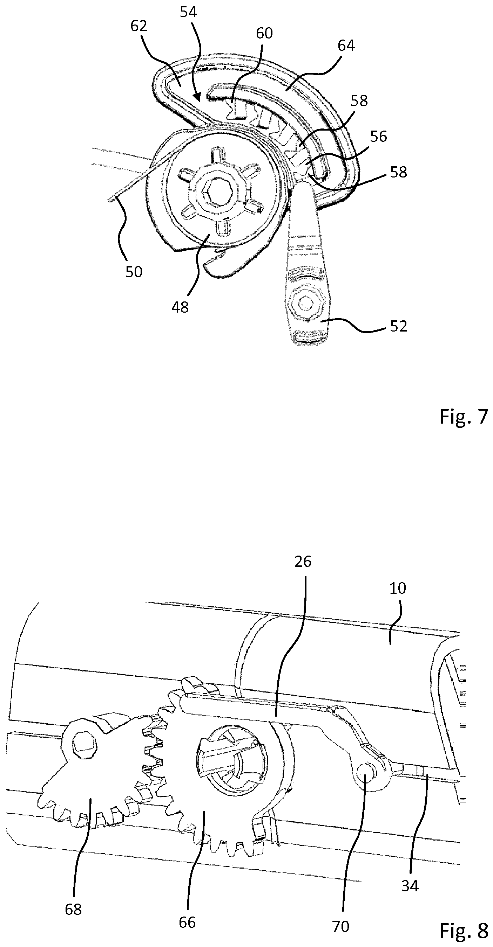

Upstream of the slat carrier 16 in the direction of flow of the air, a shut-off element 24 is furthermore provided, in the present case a shut-off flap 24 that is mounted in a pivotable manner on the housing. The pivot axle of the shut-off flap 24 can be seen at the reference sign 25 in figure 2. A control lever 26 is mounted on the slat carrier 16 so as to be pivotable about a pivot axle 28. The opposite free end of the control lever 26 is engaged with a gear wheel 30 that is coupled to the shut-off flap 24 for conjoint rotation. A spring 32 pretensions the control lever 26 into the toothing of the gear wheel 30. The housing 10 has a longitudinal slot 34, in which the axle connection between the control lever 26 and the slat carrier 16 is guided upon longitudinal displacement of the slat carrier 16 in the housing 10. A lever arm 33 mounted in a pivotable manner on the housing 10 is guided with its end that is concealed in figures 1 and 2 in a push-push control cam formed on the gear wheel 30. This push-push control cam can be configured for example as explained below with regard to the exemplary embodiment shown in figures 6 and 7. Other push-push control cams are also conceivable, however.

In the example shown in figures 1 and 2, the slat carrier 16 can be pushed over from its rest position into the housing 10, with the result that the control lever 26 rotates the gear wheel 30 and thus the shut-off flap 24 one step further until the free end of the control lever 26 latches in the next tooth of the toothing of the gear wheel 30. In the process, the lever arm 33 is guided further, in the push-push control cam of the gear wheel 30, into a next position in which the lever arm 33 is held. The control lever 26 is deflected slightly upward in the process between two teeth, counter to the spring-pretensioning of the spring 32. In this way, it is possible, for example starting from the open position of the shut-off flap 24 shown in figure 2, for said shut-off flap 24 to be pivoted incrementally in the direction of a closed position, in which it completely closes the flow connection between the air inlet opening 12 and the air outlet opening 14. The control lever 26 and thus the slat carrier 16 in this case move back into their rest position following each actuation. The adjustment is thus an incremental adjustment of the shut-off flap 24 for example starting from the open position into the closed position by means of a push-push mechanism.

Once the control lever 26 reaches the end of the toothing of the gear wheel 30, the lever arm 33 is pushed to the side and passes back to the start of the push-push control cam. In the present case, the gear wheel 30 and the shut-off flap 24 are pretensioned by means of a spring 31 into the open position shown in figure 2. Therefore, during the return movement of the lever arm 33 to the start of the push-push control cam, a direct and complete return movement of the gear wheel 30 and thus of the shut-off flap 24 into the open position shown in figure 2 occurs.

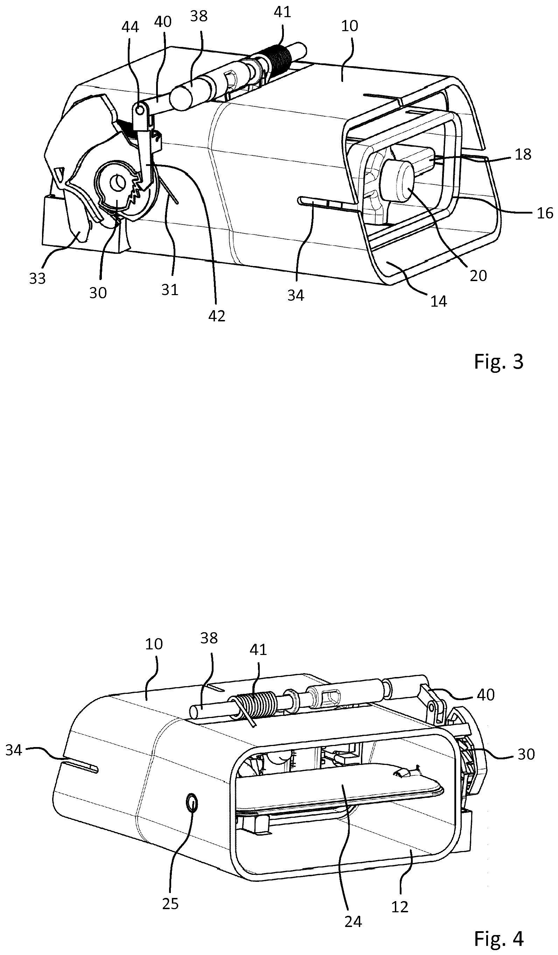

The exemplary embodiment shown in figures 3 to 5 corresponds largely to the exemplary embodiment shown in figures 1 and 2. It differs with regard to the coupling of the slat carrier 16 to the shut-off flap 24. Thus, in this exemplary embodiment, as can be seen in particular in figure 5, the slat carrier 16 is connected to the gear wheel 30 via a pivot-lever construction. The slat carrier 16 is connected via an angled first coupling lever 36 to a pivot axle 38 which is arranged on the top side of the housing 10 in the example shown. A spring 41 pretensions the pivot axle 38 into the open position of the shut-off flap 24. A second coupling lever 40 is likewise connected to the pivot axle 38, but for conjoint rotation. It is in turn connected to a third coupling lever 42 in a pivotable manner in a pivot joint 44. The third coupling lever 42 engages, as a control lever, in the toothing of the gear wheel 30, as can be seen in particular in figure 5.

The function of the air outlet shown in figures 3 to 5 corresponds in principle to the function explained with regard to figures 1 and 2. In figure 5, for illustrative purposes, the housing 10 is not shown. Again, when the slat carrier 16 is pushed over from its rest position into the housing 10, a force exertion, imparted via the pivot-lever construction, of the third coupling lever 42 on the gear wheel 30 takes place such that said gear wheel 30 is rotated counter to its spring-pretensioning, wherein the third coupling lever 42 engages in the next tooth of the toothing. Again, the lever arm 33 is guided incrementally further in the push-push control cam formed on the gear wheel 30. Again, when the last tooth of the toothing is reached, the lever arm 33 is returned to the start of the push-push control cam, such that the gear wheel 30 rotates the shut-off element 24 back into its rest position.

The further exemplary embodiment shown in figures 6 and 7 corresponds again largely to the exemplary embodiment shown in figures 1 and 2. In the exemplary embodiment in figures 6 and 7, the control lever 26 engages with its free end in a toothing 46 of a control disk 48 coupled to the shut-off flap 24 for conjoint rotation. The control disk 48 is again pretensioned via a spring 50, for example into the open position of the shut-off flap 24. On the housing 10, a lever arm 52 is mounted in a pivotable manner with one end. With its other end, the lever arm 52 engages in a control cam 54 of the control disk 48, as can be seen in the detail view in figure 7, which is from the rear as compared with figure 6. For example, the control lever 52 can have, at its free end, a control protrusion which is guided in the control cam 54. Pushing over of the slat carrier 26 into the housing 10 brings about a corresponding longitudinal displacement of the control lever 26 and as a result a rotation of the control disk 48 counter to its spring-pretensioning. In this case, this rotation takes place in the clockwise direction in figure 7. The control lever 52 is, as a result, pushed into a recess 56, formed between two ramp-like elevations 58, of the control cam 54. To this end, the control lever 52 is slightly deformed elastically, out of the plane of the drawing in figure 7. The control lever 52 remains in this recess 56 with its control protrusion in each case until the slat carrier 16 is actuated again. In the example illustrated in figure 7, a plurality of such recesses 56 are formed in the control cam 54. The recesses 56 correspond to incremental setting possibilities of the shut-off flap 24 starting for example from its open position into its closed position. For example, the closed position is reached when the control lever 52 is located with its control protrusion above the last ramp-like elevation 60. If the slat carrier 16 is then pushed over into the housing 10 again, the control lever 52 initially passes with its control protrusion into a control receptacle 62 of the control cam 54. Upon subsequent releasing of the slat carrier 16 and a corresponding return movement, the control lever 52 is now guided back, with its control protrusion, along the return path 64 of the control cam 54 to the start of the control cam 54, which is illustrated in figure 7, while being pivoted slightly with respect to the housing 10. During this return, the control disk 48 is rotated back on account of its spring-pretensioning and thus the shut-off flap 24 is moved back into the completely open position in this example.

It goes without saying that the control cam shown in figure 7 is merely by way of example. A large number of further control cams are conceivable in order to realize incremental adjustment by means of a push-push mechanism.

Figure 8 shows a further exemplary embodiment, which again corresponds in large part to the exemplary embodiment shown in figures 1 and 2. In contrast to the exemplary embodiment in figures 1 and 2, the exemplary embodiment in figure 8 provides a continuous adjustment possibility of the shut-off flap 24. To this end, the control lever 26 is coupled in a pivotable manner, by its left-hand end in figure 8, to a first gear wheel 66, which is engaged with a second gear wheel 68, which in turn is coupled to the shut-off flap 24 for conjoint rotation. Since the control lever 26 is at the same time coupled to the slat carrier 16 in a pivotable manner via the pivot axle shown in figure 8 at the reference sign 70, the shut-off flap 24 can be adjusted continuously in this way by the slat carrier 16 being pushed into the housing 10 or by the slat carrier 16 being pulled out of the housing 10.

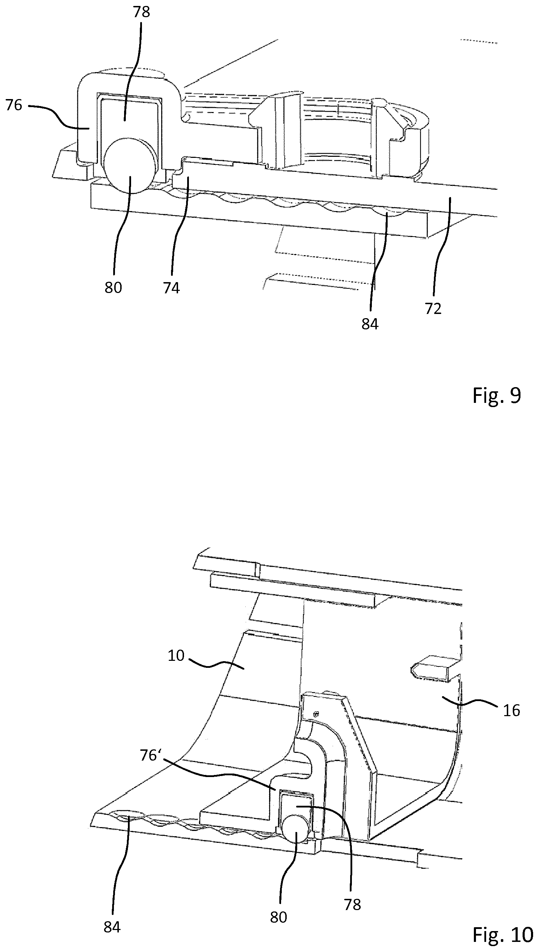

Figure 9 shows a detail of a further exemplary embodiment. In this exemplary embodiment, it is possible, for example instead of the control lever 26 shown in figure 8, for a latching bar 72 to be connected to the slat carrier 16. The latching bar 72 acts with its free end 74 on a holding receptacle 76 in which a latching part 80 that is pretensioned downwardly by spring-pretensioning means 78, in the present case a latching ball 80, is arranged. For example, a plurality of latching receptacles 84 are formed on the housing 10. As a result of the slat carrier 16 being pushed into the housing and out of the housing, respectively, the latching part 80 is moved forward and back via the latching bar 72 and the connection thereof to the holding receptacle 76, such that, depending on the position of the slat carrier 16, said latching part 80 latches in one of the latching receptacles 84. Via a suitable coupling, this longitudinal movement can be transmitted into a corresponding pivoting position of the shut-off flap 24, such that, in this way, incremental adjustment of the shut-off flap 24 between the open position and the closed position can take place, in particular in both directions, without a push-push mechanism.

Figure 10 shows an alternative configuration to the configuration according to figure 9. In this exemplary embodiment, the holding receptacle 76' is formed directly on the slat carrier 16. As can be seen, the latching part 80 is adjusted by a longitudinal displacement of the slat carrier 16 again between the latching receptacles 84, with the result that corresponding pivoting of the shut-off flap 24 again takes place. The function corresponds to this extent to the function explained with respect to figure 9.

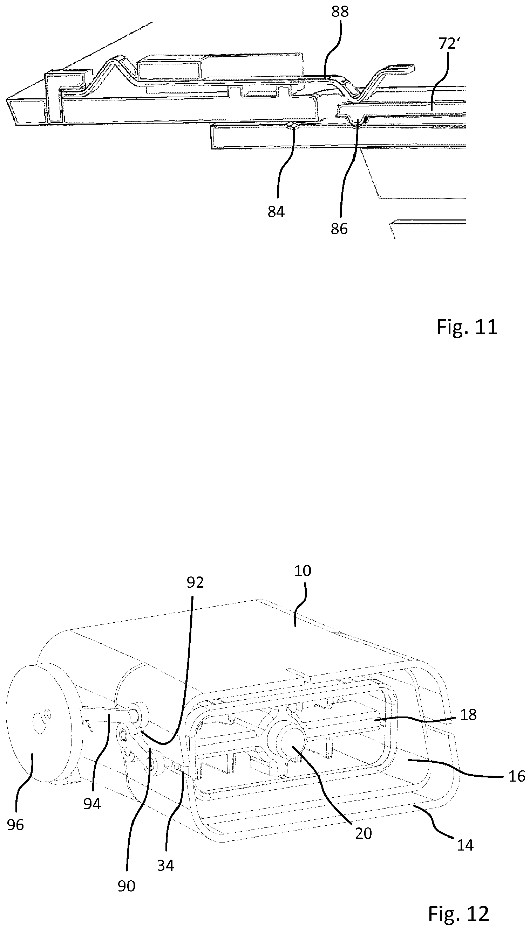

Figure 11 shows a further alternative configuration to figure 9. In this exemplary embodiment, the latching bar 72', connected for example to the slat carrier 16, itself has at its free end a latching protrusion 86 which, depending on the longitudinal position of the slat carrier 16, latches in one of several latching receptacles 84. In figure 11, only one latching receptacle 84 is shown for illustrative reasons. It goes without saying that, in practice, a plurality of such latching receptacles 84 are provided. Furthermore, a spring 88 can also be seen in figure 11, said spring 88 in this case pushing the latching protrusion 86 of the latching bar 72' into the latching receptacle 84. Otherwise, the function for adjusting the shut-off flap 24 corresponds again to the function explained with respect to figure 9.

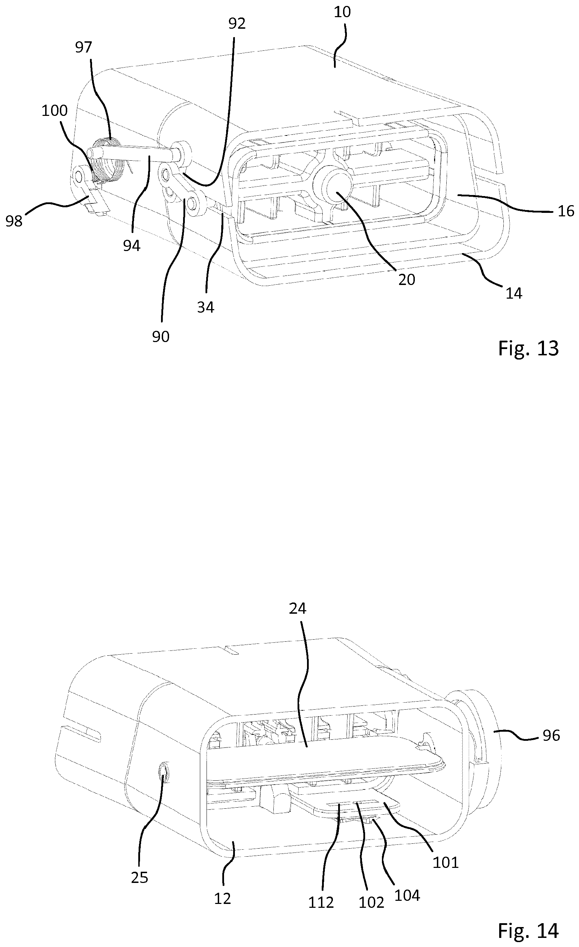

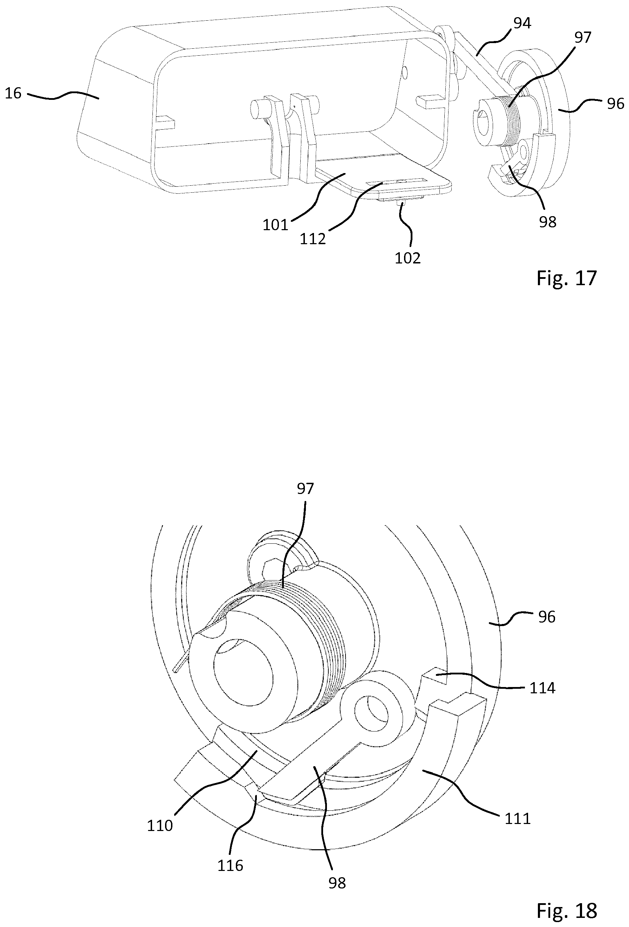

On the basis of figures 12 to 19, a further exemplary embodiment of continuous adjustability of the shut-off flap 24 from one end position into the other end position is intended to be explained. In this configuration, the slat carrier 16 acts, via a pivot-lever construction made up of a first pivot lever 90, a second pivot lever 92 and a third pivot lever 94, on a rotary disk 96 coupled to the shut-off flap 24 for conjoint rotation. As a result of the slat carrier 16 being pushed into the housing 10, the rotary disk 96 is rotated counterclockwise in figure 12 counter to the pretensioning of a spring 97. The spring 97 is readily apparent in the illustration in figure 13, in which the rotary disk 96 is not shown for illustrative reasons compared with figure 12. A brake lever 98 that is mounted in a pivotable manner on the housing 10 and is in braking contact with the rotary disk 96 with its free end is provided, said brake lever 98 being pretensioned by means of a spring 100 against a braking face 110, apparent in figure 18, of the rotary disk 96.

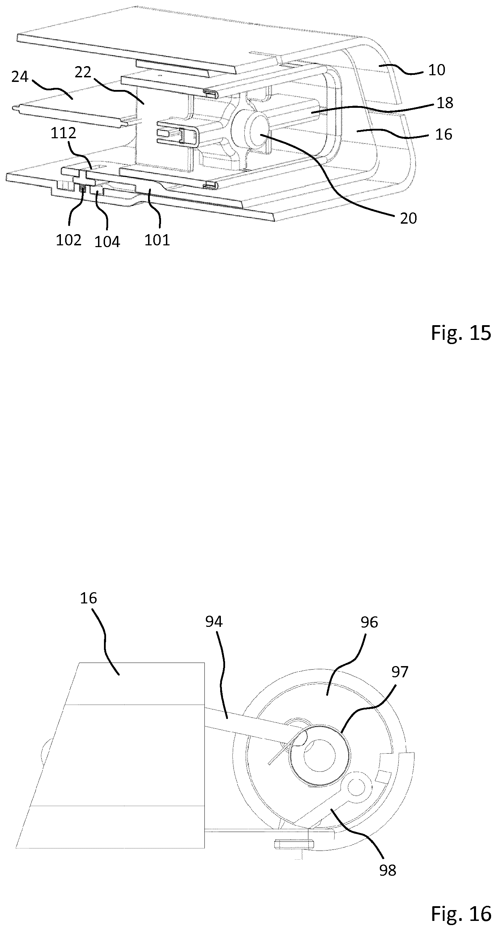

In the view in figure 16, the housing and the air-guiding slats and also the shut-off flap are not illustrated. Figure 16 is a view of the rear side facing away from the front side, shown in figure 12, of the rotary disk 96. It is apparent from figure 16 that, on account of its angular position, the brake lever 98 counteracts rotation of the rotary disk 96 counterclockwise in figure 16 (clockwise in figure 12). In the opposite direction of rotation, however, the rotary disk 96 can be rotated easily, wherein the rotary disk 96 slides along the brake lever 98, with its braking face facing the brake lever 98, without considerable braking action. The cooperation of the brake lever 98 with the rotary disk 96 can, in addition to figure 18, also be seen in figure 17, in which, for illustrative reasons compared with the illustration in figure 14, in particular the housing, the air-guiding slat arrangement and the shut-off flap are not shown. The braking face cooperating with the brake lever 98 is shown at the reference sign 110 in figure 18.

Furthermore, at the reference sign 102, a control pin is illustrated, which is guided in a control extension 101 connected to the slat carrier 16. In the event of a movement of the slat carrier 16 into the housing 10 or out of the housing 10, the control extension 101 is entrained and thus also the control pin 102. In addition, the control pin 102 is guided in a cardioid cam 104 that is formed on the bottom of the housing 10 in the example shown. In order that the control pin 102 can move along the cardioid cam, it is guided in the control extension 101 in a laterally movable manner in a lateral guide 112.

As can be seen in particular in the sectional illustration in figure 15, the control pin 102 has a central flange portion from which two cylindrical control portions extend in opposite directions. One of the control portions is guided in the guide 112. The other of the control portions is guided in the cardioid cam 104.

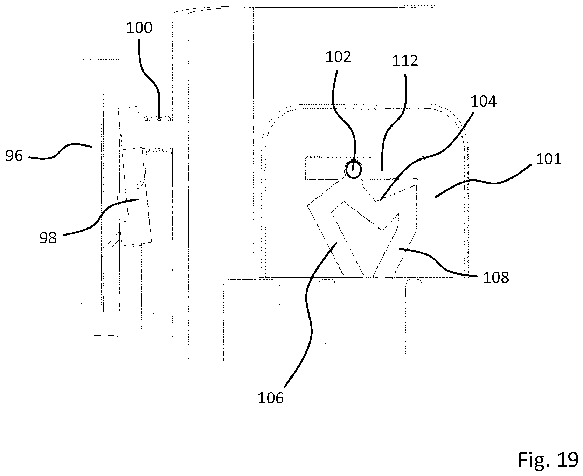

In the plan view in figure 19, two paths 106 and 108 of the cardioid cam 104 can be seen. The left-hand path 106, in figure 19, of the cardioid cam 104 is the path along which the control pin 102 is guided upon rotation of the rotary disk 96 in the clockwise direction in figure 16. The rotation of the rotary disk 96 that results from the movement of the slat carrier 16 takes place in this case counter to the spring-pretensioning of the spring 97. If the slat carrier 16 is subsequently released, the spring 97 causes the rotary disk 96 to rotate back counterclockwise in figure 16. This is prevented by the braking engagement of the brake lever 98. The brake lever 98 thus holds the rotary disk 96 and thus the shut-off flap 24 securely in the respective position. If, for example, starting from the completely closed position, the slat carrier 16 is pushed further inward, the control pin passes into the path 108, illustrated on the right in figure 19, of the cardioid cam 104. The brake lever 98 is then pushed out of engagement with the braking face 110 of the rotary disk 96 by a decoupling portion 114 shown in figure 18, undergoing elastic deformation. The rotary disk 96 can accordingly be rotated back on account of the pretensioning of the spring 97, until the shut-off flap 24 is back in its starting position, for example the open position. In the process, the brake lever 98 is moved back into braking engagement with the braking face 110 of the rotary disk 96 again by a coupling portion 116 (figure 18) formed on a coupling protrusion 111 of the rotary disk 96. The cycle can then start again. The brake lever 98 is intended to cooperate with the braking face 110 such that it securely blocks any rotation of the rotary disk 96 counterclockwise in figure 16 and thus holds the shut-off flap 24 in the desired position. At the same time, the brake lever 98 is intended to slide on the decoupling portion 114 and the coupling portion 116 without any risk of blocking. This can be achieved by a suitable geometry of the friction partners involved. It is also possible however, to achieve this by suitable adaptation of the surfaces of the braking face 110 for the one part and the decoupling portion 114 and/or coupling portion 116 for the other part. In particular, the surface of the braking face 110 can be configured such that it exerts a greater frictional force than the decoupling portion 114 and/or the coupling portion 116. For example, the surface of the braking face 110 can have an uneven structure that increases the frictional force, for example be ribbed or the like. The surface of the decoupling portion 114 and/or coupling portion 116 can be for example smooth. It should also be mentioned that the brake lever 98 in figure 18 is located almost in the starting position, i.e. for example the open position of the shut-off flap 24.

### List of reference signs

- 10: Housing
- 12: Air inlet opening
- 14: Air outlet opening
- 16: Slat carrier
- 18: Front air-guiding slat
- 20: Operating element
- 22: Rear air-guiding slats
- 24: Shut-off element/shut-off flap
- 26: Control lever
- 28: Pivot axle
- 30: Gear wheel
- 31: Spring
- 32: Spring
- 33: Lever arm
- 34: Longitudinal slot
- 36: First coupling lever
- 38: Pivot axle
- 40: Second coupling lever
- 41: Spring
- 42: Third coupling lever
- 44: Pivot joint
- 46: Toothing
- 48: Control disk
- 50: Spring
- 52: Lever arm
- 54: Control cam
- 56: Recess
- 58: Elevation
- 60: Elevation
- 62: Control receptacle
- 64: Return path
- 66: First gear wheel
- 68: Second gear wheel
- 70: Pivot axle
- 72: Latching bar
- 72': Latching bar
- 74: Free end of the latching bar
- 76: Holding receptacle
- 76': Holding receptacle
- 78: Spring-pretensioning means
- 80: Latching part/latching ball
- 84: Latching receptacles
- 86: Latching protrusion
- 88: Spring
- 90: First pivot lever
- 92: Second pivot lever
- 94: Third pivot lever
- 96: Rotary disk
- 97: Spring
- 98: Brake lever
- 100: Spring
- 101: Control extension
- 102: Control pin
- 104: Cardioid cam
- 106: Left-hand path
- 108: Right-hand path
- 110: Braking face
- 111: Coupling protrusion
- 112: Guide
- 114: Decoupling portion
- 116: Coupling portion

## Claims

1. Air outlet for a vehicle, comprising a housing (10) with an air inlet opening (12) and an air outlet opening (14), between which a flow connection is formed, further comprising a slat carrier (16), mounted movably in the housing (10), and a shut-off element (24) which is movable between a closed position, in which it blocks the flow connection, and an open position, in which it frees the flow connection, **characterized in that** the slat carrier (16) is mounted movably in the housing (10), wherein the slat carrier (16) is coupled to the shut-off element (24) such that, by actuation of the slat carrier (16), the shut-off element (24) is adjustable between the closed position and the open position, wherein the shut-off element (24) is adjustable into intermediate positions between the closed position and the open position, starting from the closed position and/or starting from the open position, by actuation of the slat carrier (16), the shut-off element (24) remaining in said intermediate positions until the slat carrier (16) is actuated again.

2. Air outlet according to Claim 1, **characterized in that** the shut-off element (24) is adjustable continuously into intermediate positions between the closed position and the open position.

3. Air outlet according to Claim 1, **characterized in that** the shut-off element (24) is adjustable incrementally into intermediate positions between the closed position and the open position.

4. Air outlet according to one of the preceding claims, **characterized in that** the shut-off element (24) is held at least in the intermediate positions by a friction fit between a first friction partner coupled to the shut-off element (24) and a second friction partner coupled to the slat carrier (16).

5. Air outlet according to one of the preceding claims, **characterized in that** a braking device is provided which exerts a braking action on a braking element coupled to the shut-off element (24), said braking action keeping the shut-off element (24) in the respective intermediate position.

6. Air outlet according to Claim 5, **characterized in that** the braking device exerts its braking action substantially only in a first direction of movement of the shut-off element (24).

7. Air outlet according to either of Claims 5 and 6, **characterized in that** the braking device comprises a brake lever (98) that acts on a rotary disc (96) coupled to the shut-off element (24) for conjoint rotation.

8. Air outlet according to one of Claims 1 to 7, **characterized in that** the slat carrier (16) and the shut-off element (24) are parts of a push-push mechanism which is activatable by the slat carrier (16) being pushed over from a particular use position in an actuating direction, wherein the shut-off element (24) changes its position as a result of the activation of the push-push mechanism.

9. Air outlet according to one of Claims 1 to 7, **characterized in that** the shut-off element (24) is adjustable from the closed position into the open position by the slat carrier (16) being moved in a first direction and/or from the open position into the closed position by the slat carrier (16) being moved in a second, opposite direction.

10. Air outlet according to Claim 9, **characterized in that** a displaceably mounted latching element that is coupled to the slat carrier (16) on one side and to the shut-off element (24) on the other side is provided, and **in that** a plurality of latching receptacles (84) are formed on the housing (10), the latching element latching in said latching receptacles (84) in different positions of the shut-off element (24).

11. Air outlet according to Claim 10, **characterized in that** the latching element is pretensioned into the latching receptacles (84) by means of spring pretensioning means (78, 88).

12. Air outlet according to either of Claims 10 and 11, **characterized in that** the latching element is formed by a latching bar (72') which is coupled by its first end to the slat carrier (16) or the shut-off element (24) and has, in the region of its second, free end, a latching protrusion (86) that latches in the latching receptacles (84).

13. Air outlet according to either of Claims 10 and 11, **characterized in that** the latching element comprises a latching bar (72) which is coupled by its first end to the slat carrier (16) or the shut-off element (24) and which acts, by way of its second, free end, on a holding receptacle (76, 76') in which a latching part (80), preferably a latching ball (80) or a latching cylinder, pretensioned into the latching receptacles (84) by spring pretensioning means (78) is arranged.

14. Air outlet according to one of the preceding claims, **characterized in that** the slat carrier (16) is coupled to the shut-off element (24) via a control lever (26).

15. Air outlet according to Claim 14, **characterized in that** the control lever (26) is mounted in a pivotable manner on the slat carrier (16) by way of its first end and is mounted in a pivotable manner on a first gear wheel (66) by way of its second end.

16. Air outlet according to Claim 15, **characterized in that** the first gear wheel (66) is engaged with a second gear wheel (68) coupled to the shut-off element (24) for conjoint rotation.

17. Air outlet according to Claim 14, **characterized in that** the control lever (26) is coupled to the slat carrier (16) with its first end and engages, with its second, free end, in a toothing (46) of a control disc (48) coupled to the shut-off element (24) for conjoint rotation, wherein the control disc (48) has a control cam (54) in which a pivotably mounted lever arm (52) is guided such that the control disc (48) is rotated, starting from a starting position, counter to spring pretensioning in the event of a longitudinal displacement of the control lever (26), wherein, until it reaches an end position, the control lever (26) latches in the respectively next tooth of the toothing (46), in each case moving back into its starting position, and as a result holds the control disc (48).

18. Air outlet according to Claim 17, **characterized in that** the control disc (48) is rotated back into its starting position, starting from the end position, by its spring pretensioning in the event of a longitudinal displacement of the control lever (26).
